Europäisches Patentamt

**European Patent Office**

Office européen des brevets

(19)

(11) Numéro de publication: **0 119 163**

**A2**

(12)

# DEMANDE DE BREVET EUROPEEN

(21) Numéro de dépôt: **84810076.4**

(22) Date de dépôt: **08.02.84**

(51) Int. Cl.³: **H 04 M 19/04**

(30) Priorité: **08.02.83 CH 689/83**

(43) Date de publication de la demande:
**19.09.84 Bulletin 84/38**

(84) Etats contractants désignés:
**AT BE DE FR GB NL SE**

(71) Demandeur: **LANGATRONIC SA**
**rue du Crêt 5**
**CH-2300 La Chaux-de-Fonds(CH)**

(72) Inventeur: **Jaquet, Claude-Eric**
**Joux-Derrière 44**
**CH-2309 La Chaux-de-Fonds(CH)**

(74) Mandataire: **Seehof, Michel et al,**
**c/o AMMANN INGENIEURS-CONSEILS EN PROPRIETE**
**INTELLECTUELLE SA BERNE Schwarztorstrasse 31**
**CH-3001 Berne(CH)**

(54) Procédé et installation de transmission d'informations par le réseau basse tension de distribution d'énergie électrique et son utilisation.

(57) Pour transmettre l'information de sonnerie du téléphone par le réseau basse tension 220V de distribution d'énergie électrique, on engendre, à l'aide d'un appareil émetteur (3), lorsque la sonnerie du téléphone est activée, un signals à fréquence fixe qu'on applique, à travers une fiche (5), au réseau de distribution d'énergie. Un ou plusieurs appareils récepteurs (7, 11), branchés sur la même phase du secteur, émettent un son lorsqu'ils détectent la fréquence émise.

Cette disposition permet ainsi d'obtenir un appareil récepteur mobile et bon-marché se branchant sur n'importe quelle prise du secteur d'une maison et capable de restituer l'information de sonnerie du téléphone.

Fig.1

EP 0 119 163 A2

Procédé et installation de transmission d'informations
par le réseau basse tension de distribution d'énergie
électrique et son utilisation

La présente invention concerne un procédé de transmission d'informations par le réseau basse tension 220 V de distribution d'énergie électrique, une installation pour la mise en oeuvre du procédé et son utilisation.

A titre d'exemple, la plupart des abonnés n'entendent pas la sonnerie du téléphone de toutes les pièces de leur maison, appartement ou lieu de travail. Un moyen connu pour parer à cet inconvénient consiste à faire poser par l'entreprise qui gère le réseau téléphonique une sonnerie de rappel puissante au centre de la maison ou de l'appartement. La pose d'un tel rappel est généralement coûteuse, en particulier si ce dernier doit être placé loin du téléphone. De plus, l'installation d'un tel rappel est fixe et celui-ci ne peut donc pas être déplacé d'un endroit à un autre. La solution décrite ci-dessus comporte un inconvénient supplémentaire provenant du fait que, pour être audible de plusieurs pièces éloignées l'une de l'autre, la sonnerie doit être stridente et peut par conséquent gêner un éventuel voisin.

La présente invention ne concerne cependant pas uniquement la transmission de l'information de sonnerie du téléphone mais, de manière plus générale, la transmission d'informations par le réseau basse tension de distribution d'énergie électrique. Les informations transmises peuvent être délivrées par exemple par des capteurs photoélectriques détectant la présence d'un intrus dans une pièce ou par des capteurs électro-chimiques détectant la présence d'un incendie.

En conséquence, le but de l'invention est de fournir un procédé de transmission d'informations et une installation pour sa mise en oeuvre n'exigeant pas de couplage galvanique avec la source d'information et permettant de délivrer les informations à n'importe quel point du réseau basse tension de distribution d'énergie électrique.

Le procédé de transmission d'informations selon l'invention est décrit dans la revendication 1 et l'installation pour la mise en oeuvre de ce procédé est définie dans la revendication 4.

Avantageusement, l'information à tansmettre, par exemple la sonnerie du téléphone, est captée par induction magnétique au moyen d'une bobine placée à proximité du récepteur téléphonique. L'installation ne comporte ainsi aucune liaison galvanique avec le réseau téléphonique.

Cette installation permet de brancher l'appareil récepteur des informations sur n'importe quelle prise du réseau 220 V existant.

L'invention va être décrite ci-après, à titre d'exemple et à l'aide du dessin représentant une des formes possibles d'exécution correspondant au cas de la transmission des informations de sonnerie du téléphone; dans ce dessin:

La figure 1 représente le schéma-bloc de l'installation de transmission;

la figure 2 représente l'appareil émetteur de l'installation, relié au capteur magnétique;

la figure 3 représente l'appareil récepteur de l'installation.

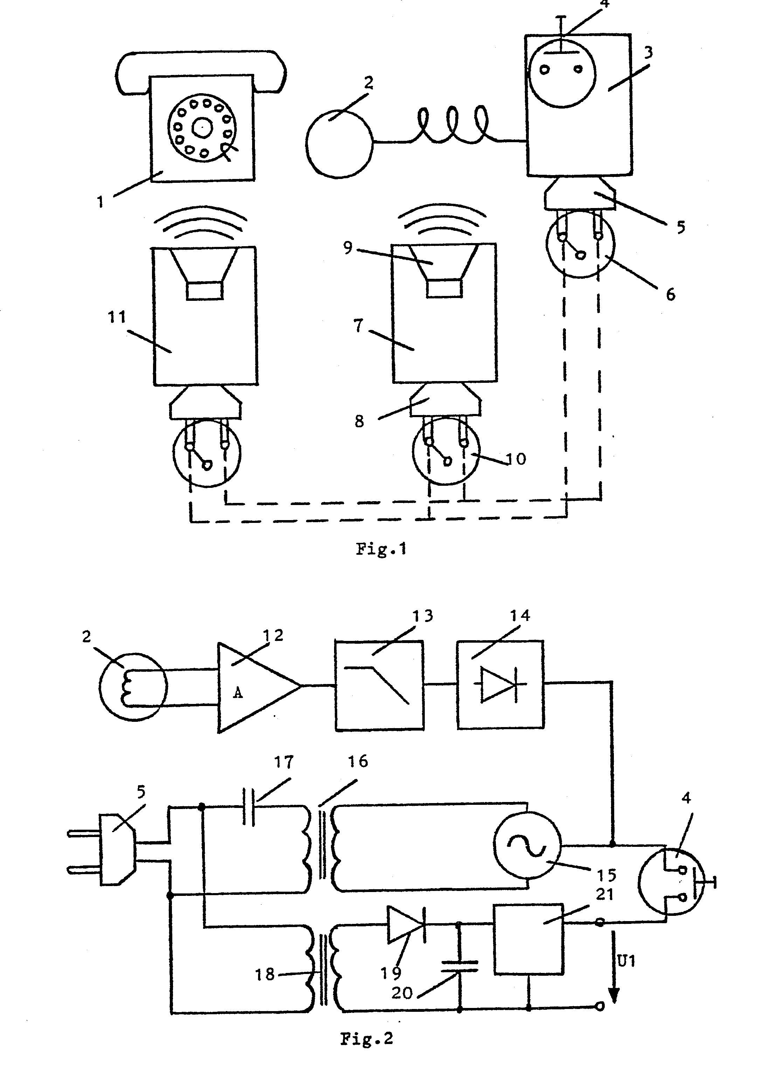

Comme montré sur la figure 1, un capteur magnétique 2 se trouve à proximité d'un appareil téléphonique 1 et transmet à l'émetteur 3, lorsque la sonnerie du téléphone est activée, une tension alternative induite par le champ magnétique de fuite de la sonnette du téléphone. L'émetteur 3 génère, lorsqu'il détecte la tension alternative produite par le capteur 2, un signal sinusoidal de haute fréquence à fréquence fixe fo comprise par exemple entre 40 et 160 kHz et le transmet au réeau de distribution d'énergie électrique par l'intermédiaire d'une fiche à courant alternatif 5 incorporée au boîtier de l'appareil et branchée sur une prise secteur 220 V 6.

Un récepteur 7 muni d'une fiche à courant alternatif 8 incorporée au boîtier de ce dernier est branché sur une prise secteur 220V 10 reliée à la même phase du réseau de distribution d'énergie que la prise secteur 6. Lorsque le signal sinusoidal de fréquence fo généré par l'émetteur 3 est présent aux bornes de la fiche secteur 8 du récepteur 7, celui-ci émet un son à l'aide d'un vibreur électronqiue 9. Un deuxième récepteur 11 ou plusieurs autres récepteurs semblables peuvent également être branchés sur la même phase du secteur 220V et servir de rappels.

On peut, à l'aide d'un bouton-poussoir 4 incorporé à l'émetteur 3, générer le signal sinusoidal de fréquence fo indépendamment de la sonnerie du téléphone; le signal est transmis au réseau 220V tant que le bouton poussoir est enfoncé. Cette fonction additionnelle permet une recherche de personne en composant à l'aide du bouton-poussoir 4 une séquence de signaux qui sera reçue par tous les récepteurs mais dont le code composé manuellement correspond à la personne recherchée.

La figure 2 illustre le schéma d'une forme d'exécution de l'émetteur 3. Le signal produit par le capteur 2 est amplifié par l'amplificateur 12 puis passe par un circuit de filtrage 13 dont la sortie est reliée à un détecteur 14. La sortie du détecteur 14 commande, en parallèle avec le bouton-poussoir 4, la mise en service d'un oscillateur 15 de haute fréquence, dont la sortie est reliée au réseau de distribution d'énergie par l'intermédiaire d'une fiche à courant alternatif 5, d'une capacité de couplage 17 et d'un transformateur 16 assurant une séparation galvanique entre les circuits électroniques et le réseau.

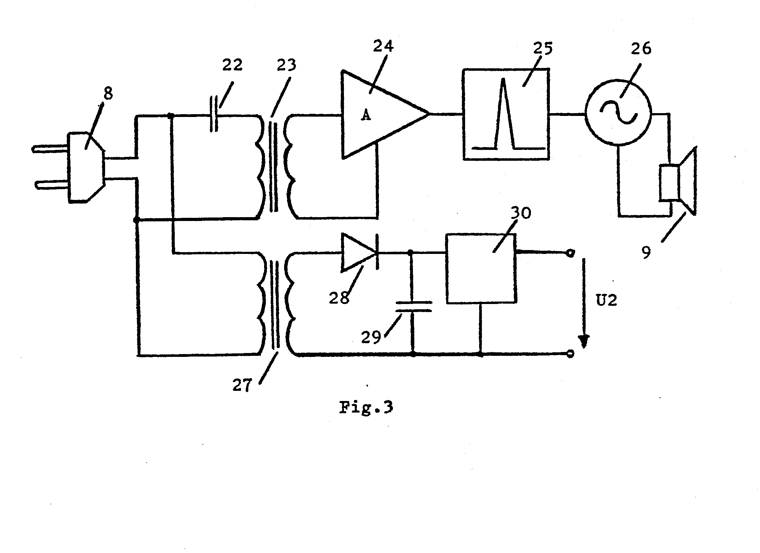

L'alimentation en courant continu des circuits électroniques est obtenue à partir de la puissance électrique disponible sur le réseau à l'aide d'un transformateur 18 qui abaisse la tension du réseau, d'une diode 19 de redressement et d'une capacité 20 de filtrage suivis d'un régulateur de tension 21. La figure 3 illustre le schéma d'une forme d'exécution d'un récepteur 7 ou 11. L'alimentation en courant continu des circuits électroniques est obtenue à partir de la puissance électrique disponible sur le réseau à l'aide d'un transformateur 27 abaisseur de tension, d'une diode 28 de redressement et d'une capacité 29 de filtrage suivis d'un régulateur de tension 30. Le signal sinusoidal de fréquence fo généré par l'émetteur est transmis par l'intermédiaire d'une fiche à courant alternatif 8, d'une capacité de couplage 22 et d'un tansformateur 23 de séparation galvanique à un amplificateur 24. Le signal amplifié est appliqué à un circuit de filtrage et de détection 25; ce dernier est réalisé par une boucle à asservissement de phase et un comparateur de phase. La sortie du bloc de filtrage et de détection 25 commande un oscillateur 26 à fréquence acoustique relié à un vibreur électronique 9. L'installation décrite est pratique et peu coûteuse.

L'installation décrite ci-dessus permet de transmettre au réseau l'information de sonnerie du téléphone ou une information codée manuellement servant à une recherche de personne. Cependant, le principe général de l'installation selon l'invention offre une plus large gamme de possibilités d'applications. Il n'est en aucun cas limité à la transmission de l'information de sonnerie du téléphone. En effet, le capteur inductif 2 des figures 1 et 2 peut détecter autre chose que le champ magnétique de fuite de la bobine de la sonnette du téléphone, par exemple une perturbation d'un champ électro-magnétique produite par un intrus dans un local. Dans ce genre de détection anti-vol, le capteur 2 peut aussi être de type photoélectrique ou capacitif. Dans ce cas, le circuit de détection 12, 13, 14 de la figure 2 doit être adapté au capteur utilisé. Si le détecteur 2 est par exemple de type électro-chimique, il peut permettre la détection de fumée signalant la présence d'un incendie. Comme dans le cas précédant, le circuit de détection 12, 13, 14 doit être adapté au capteur utilisé. Il est clair que plusieurs capteurs peuvent aussi être utilisés en même temps ou séquentiellement.

Ce qui précède montre que l'invention offre une large gamme de possiblilités d'applications. Les récepteurs 7, 11 peuvent être montés de manière amovible à n'importe quelle prise réseau existante et il n'existe aucun couplage galvanique avec le réseau basse tension de distribution d'énergie ou, dans le cas de la forme d'exécution illustrée aux figures 1 et 2, avec le réseau téléphonique.

Revendications:

1. Procédé de transmission d'informations par le réseau basse tension de distribution d'énergie électrique, caractérisé en ce qu'on engendre, à partir d'une information délivrée par au moins un capteur d'information, un signal sinusoidal à fréquence fixe déterminée, on applique le signal à des lignes du réseau basse tension de distribution d'énergie électrique et on détecte ledit signal en un quelconque autre point dudit réseau basse tension.

2. Procédé selon la revendication 1, caractérisé en ce qu'on capte l'information à transmettre par induction magnétique, par voie photoélectrique, capacitive ou électro-chimique.

3. Procédé selon la revendication 2, caractérisé en ce que l'information à transmettre est captée sans couplage galvanique avec la source de ladite information.

4. Installation pour la mise en oeuvre du procédé selon la revendication 1, caractérisée en ce qu'elle comprend un capteur (2) délivrant un signal représentatif de l'information à transmettre, un appareil émetteur (3) avec un générateur de fréquence (15) commandé par ledit signal représentatif et une paire de bornes de sortie (5) pour la connexion au réseau basse tension de distribution d'énergie, les bornes (5) étant reliées au générateur (15) par l'intermédiaire d'un transformateur (16), et au moins un appareil récepteur (7, 11) comportant une paire de bornes d'entrée (8) pour la connexion au réseau basse tension de distribution d'énergie et un transformateur (23) connectant les bornes (8) à un circuit de détection (24, 25) commandant un générateur audiofréquence (26) et un vibreur électronique (9).

5. Installation selon la revendication 4, caractérisée en ce qu'elle comprend un interrupteur (4) permettant la commande manuelle du générateur de fréquence (15).

6. Installation selon la revendication 4, caractérisée en ce que le transformateur (16) délivrant le signal du générateur (15) est relié aux bornes de sortie par une capacité de couplage (17) et que le transformateur (23) alimentant le circuit de détection (24, 25) est couplé aux bornes d'entrée (8) par une capacité de couplage (22).

7. Installation selon la revendication 4, caractérisée en ce que l'appareil émetteur (3) comprend en outre un amplificateur (12), un filtre (13) et un circuit de détection (14).

8. Installation selon la revendication 4, caractérisée en ce que l'appareil récepteur (7, 11) comprend un amplificateur (24) et un circuit de détection (25) réalisé par une boucle à asservissement de phase et un comparateur de phase.

9. Installation selon la revendication 4, caractérisée en ce que le capteur (2) est du type inductif, capacitif, photoélectriuqe ou électro-chimique.

10. Utilisation de l'installation selon la revendication 4 pour transmettre sur un réseau basse tension de distribution d'énergie électrique, le cas échéant, les informations relatives à une sonnerie de téléphone, une recherche de personnes, à la détection d'un intrus dans un local ou à la détection d'un incendie dans un local.

Fig.1

Fig.2

Fig.3